# EUROPÄISCHE PATENTANMELDUNG

(11) **EP 1 101 785 A1**
(43) Veröffentlichungstag der Anmeldung: **23.05.2001**
(21) Anmeldenummer: 99402830.6
(22) Anmeldetag: 15.11.1999
(51) Int. Cl.: C08G 63/692, C08K 5/5313, C08L 67/00, G02B 6/44

(54) **Hohl- oder Bündelader**

(71) Anmelder: ALCATEL, 75008 Paris (FR)
(72) Erfinder: Rieckert, Bianca, 41236 Mönchengladbach (DE)
(74) Vertreter: Rausch, Gabriele, Dr.

(57) **Zusammenfassung**

Es wird eine Hohl- oder Bündelader beschrieben, bestehend aus einer Aderhülle (1) sowie innerhalb der Aderhülle (1) befindlichen Lichtwellenleitern (2), wobei die Aderhülle (1) aus einem thermoplastischen Werkstoff besteht, der einen flammhemmenden Zusatz enthält.

## Beschreibung

Die Erfindung betrifft eine Hohl- oder Bündelader nach dem Oberbegriff des Anspruchs 1.

Unter einer Hohl- oder Bündelader versteht man ein Kunststoffröhrchen - Aderhülle - mit einem bzw. mehreren darin befindlichen, reibungsarm und gegen Deformation hinreichend stabil untergebrachten Lichtwellenleitern. Hohl- bzw. Bündeladern weisen alle Merkmale eines universell verwendbaren Grundelementes für ein optisches Kabel auf.

Üblicherweise sind Hohl- bzw. Bündeladern mit einer leicht thixotropen, chemisch neutralen Masse gefüllt, die innerhalb eines Temperaturintervalls von -30 °C bis + 70 °C weder einfriert noch ausläuft und die Schutzbeschichtung des Lichtwellenleiters nicht angreift und aufquellen läßt.

Mit Hohl- bzw. Bündeladern bestückte optische Kabel finden ihren bevorzugten Einsatz überall dort, wo an die Übertragungskapazität trotz unterschiedlichster Umwelteinflüsse besonders hohe Anforderungen gestellt werden. Als Material für die Aderhülle haben sich thermoplastische Werkstoffe wie z. B. Polyethylen, Polypropylen, Polyamid, Polyurethan, Polyester etc als geeignet erwiesen.

Es sind optische Kabel bekannt, die in ihrem Aufbau Mittel aufweisen, die im Brandfall einen Funktionserhalt gewährleisten sowie auch eine Ausbreitung der Flammen weitestgehend verhindern. Diese Mittel befinden sich jedoch ausnahmslos im Mantelbereich. Bekannt sind z. B. Metallschichten, Kunststoffmäntel mit hohem Anteil an Füllstoffen etc.

Um ein Kabel anschließen zu können, ist es erforderlich, den Mantel abzusetzen und die Kabelseele mit den Hohl- bzw. Bündeladern freizulegen. In diesem Bereich kann in einem Brandfall die Flamme an die Aderhülle heran und diese beschädigen.

Der Erfindung liegt die Aufgabe zugrunde, eine Hohl- bzw. Bündelader so auszugestalten, daß die Aderhülle flammhemmend bzw. unbrennbar ist und somit eine Ausbreitung der Flammen verhindert.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

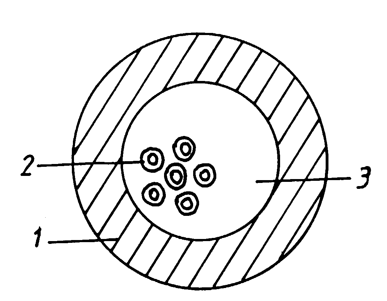

Die Erfindung ist anhand des in der Figur schematisch dargestellten Ausführungsbeispiels näher erläutert.

In der Figur ist eine Bündelader im Schnitt dargestellt, wobei mit 1 die Aderhülle, mit 2 die Lichtwellenleiter und mit 3 der mit einer thixotropen Masse ausgefüllte Raum zwischen der Aderhülle 1 und den Lichtwellenleitern 2 bezeichnet ist.

Die Aderhülle 1 besteht aus einem thermoplastischen Kunststoff und ist durch Extrusion hergestellt. Die Aderhülle 1 besteht aus einem flammhemmenden Polyester mit einem Phosphorgehalt zwischen 0,4 bis 2,0 Gew.%. Besonders bevorzugt wird ein Phosphorgehalt von 0,5 bis 0,7 Gew.%.

Zur industriellen Herstellung von flammhemmenden Polymeren auf Basis von Polyester hat sich die chemische Modifikation des Polymers durch Copolykondensation sowohl in bezug auf die Produkteigenschaften als auch in wirtschaftlicher Hinsicht am günstigsten erwiesen. Bei dieser Technologie wird das bifunktionelle Flammschutzmittel statistisch in die Polymerkette eingebaut. Deshalb ist auch die flammhemmende Wirkung permanent, da das Flammschutzmittel nicht aus dem Polymer herausmigrieren kann. Das Flammschutzmittel kann die Polymerkette während der Polykondensation oder im Falle der Verfügbarkeit von master-batch-Konzentraten auch bei den nachfolgenden Weiterverarbeitungsprozessen, wie z. B. durch Eintragen in die Polymerschmelze nach Aufschmelzen des Polyesters mittels Extruders, eingebaut werden. Durch die chemische Modifizierung mit einem geeigneten Flammschutzmittel werden die Eigenschaften des entstehenden Copolyesters und die daraus hergestellten Produkte im Vergleich zum unmodifizierten Homopolyester nur unwesentlich verändert.

Die für die erfindungsgemäße Hülle besonders geeigneten flammhemmenden Zusätze genügen der chemischen Formel. 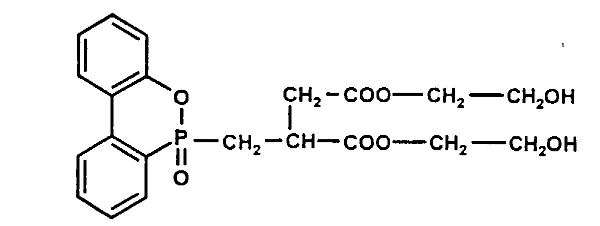 oder

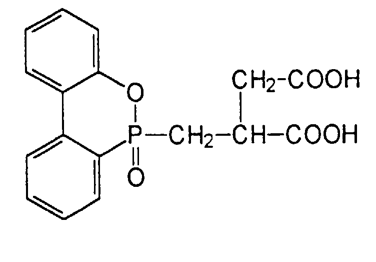

Da bekanntermaßen für die Rohrextrusion von Polyestern höhere Polymerisationsgrade erfoderlich sind, als z. B. für die Spinnextrusion von Fasern oder Filamenten, ist es in der Regel erforderlich, die nach dem Schmelzkondensationsverfahren hergestellten phosphorhaltigen Copolyester durch eine nachgeschaltete Festphasepolykondensation auf die für die Rohrextrusion erforderlichen hohen Polymerisationsgrade nach zu kondensieren. Es besteht aber auch die Möglichkeit, die erforderlichen hohen Polymerisationsgrade während der Schmelzpolykondensation zum Beispiel mittels Einsatz der in der Literatur bekannten sog. Chain extender (Kettenverlängerer) zu erreichen. In diesem Falle ist eine Festphasepolykondensation nicht mehr erforderlich.

Die nach der beschriebenen Verfahrenstechnik produzierten flammhemmenden Copolyester lassen sich bei hohen Geschwindigkeiten extrudieren. Die auf diese Weise hergestellte aus thermoplastischen Polyester bestehende Aderhülle weist eine hohe Festigkeit, ein günstiges Zeitstandsverhalten, eine hohe Maßbeständigkeit, ein günstiges Gleit- und Verschleißverhalten, eine hohe Chemikalienbeständigkeit sowie eine hervorragende Flammbeständigkeit auf. Als besonders vorteilhaft hat sich erwiesen, daß keine Anteile der verwendeten Phosphorverbindung flüchtig sind.

## Patentansprüche

1. Hohl- oder Bündelader, bestehend aus einer Aderhülle (1) sowie innerhalb der Aderhülle (1) befindlichen Lichtwellenleitern (2), wobei die Aderhülle (1) aus einem thermoplastischen Werkstoff besteht, **dadurch gekennzeichnet,** daß der thermoplastische Werkstoff einen flammhemmenden Zusatz enthält.

2. Hohl- oder Bündelader nach Anspruch 1, **dadurch gekennzeichnet,** daß der thermoplastische Werkstoff ein Polyester ist.

3. Hohl- oder Bündelader nach Anspruch 1 oder 2, **dadurch gekennzeichnet,** daß der flammhemmende Zusatz ein phosphorhaltiges Comonomer ist.

4. Hohl- oder Bündelader nach Anspruch 3, **dadurch gekennzeichnet,** daß der Phosphorgehalt in der Aderhülle zwischen 0,2 und 1 % beträgt.

5. Hohl- oder Bündelader nach einem der Ansprüche 3 oder 4, **dadurch gekennzeichnet,** daß der flammhemmende Zusatz durch die chemische Formel 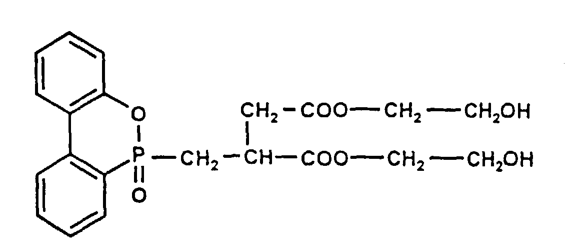 oder 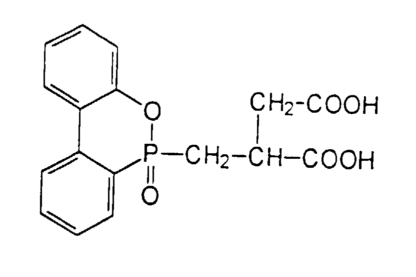 beschrieben ist.
